# EUROPÄISCHE PATENTANMELDUNG

(11) **EP 1 978 495 A1**
(43) Veröffentlichungstag der Anmeldung: **08.10.2008**
(21) Anmeldenummer: 08153480.2
(22) Anmeldetag: 28.03.2008
(51) Int. Cl.: G09B 9/00, G09B 19/00

(54) **Simulator für die Simulation eines Ein- und Ausstiegs für ein Verkehrsflugzeug nebst Verfahren**

(30) Priorität: 05.04.2007 DE 102007016825
(71) Anmelder: TFC GmbH Käufer, 42551 Velbert (DE)
(72) Erfinder: Käufer, Frank, 42551, Velbert (DE)
(74) Vertreter: Gille Hrabal Struck Neidlein Prop Roos

(57) **Zusammenfassung**

Die Erfindung betrifft einen Simulator für die Simulation eines Ein- und Ausstiegs für ein Verkehrsflugzeug. Ein solcher Simulator wird eingesetzt, wenn das Bordpersonal eines Flugzeugs darin ausgebildet wird, die Tür eines Flugzeuges zu öffnen und zu schließen sowie die verschiedenen Notfallsituationen zu trainieren. Beispielsweise internationale Fluggesellschaften verwenden solche Simulatoren, die "Doortrainer" genannt werden. Der Simulator ist mit einer Tür 1 und wenigstens einem Motor (3, 6, 7) versehen, mit dem die Tür (1) oder Teile (5) der Tür bewegbar oder Bewegungen bremsbar sind. Dadurch können die verschiedensten Gefahrensituationen besonders gut simuliert werden.

## Beschreibung

Die Erfindung betrifft einen Simulator für die Simulation eines Ein- und Ausstiegs für ein Verkehrsflugzeug. Ein solcher Simulator wird eingesetzt, wenn das Begleit- oder Bordpersonal eines Flugzeugs darin ausgebildet wird, die Tür eines Flugzeuges zu öffnen und zu schließen sowie die verschiedenen Notfallsituationen zu trainieren. Beispielsweise internationale Fluggesellschaften verwenden solche Simulatoren, die "Doortrainer" genannt werden. Ein solcher Simulator bzw. Doortrainer wird als "Stand-alone-Gerät" oder als Bestandteil eines Flugzeugrumpfs oder Rumpfstücks konstruiert und eingesetzt.

In der Tür eines Verkehrsflugzeugs, wie es im Luftverkehr eingesetzt wird, ist eine aufblasbare Rutsche untergebracht. Durch Umlegen eines Hebels in eine Position, die beispielsweise "Flight" oder "Armed" genannt wird, wird die Rutsche mit dem Flugzeugboden verbunden, der an die Tür angrenzt. Landet ein Flugzeug notfallmäßig, so öffnet sich die Tür eines solchen Verkehrsflugzeugs nach Umlegen eines dafür vorgesehenen Hebels automatisch. Dabei wird die Rutsche aus der Tür herausgezogen, fällt schließlich nach unten und bläst sich selbständig auf, Die Besatzung kontrolliert, ob sich die Rutsche ordnungsgemäß installiert hat, Im Anschluss daran können die Passagiere und die Besatzung das Flugzeug über die Rutsche verlassen,

Um die Tür eines Flugzeugs im Notfall automatisiert öffnen zu können, gibt es einen Zylinder mit Kolben, der mit Nitrogen gefüllt ist. Nitrogen wird aktiviert. Der Kolben wird nach außen gedrückt und öffnet dadurch die Tür. Bevor eine Tür eines Verkehrsflugzeugs nach außen aufgeschwenkt werden kann, muss diese regelmäßig angehoben werden. Dies geschieht mittels Vorspannung einer Kraft wie einer Federkraft. Dies hat den Vorteil, dass auch in Notfallsituationen unabhängig von Strom eine Kraft zur Verfügung steht, um die Tür anheben zu können.

Öffnet sich im Fall einer Notlandung eine Flugzeugtür nach Umlegen des Hebels nicht automatisch, so muss diese manuell geöffnet werden. Zunächst ist ein relativ großer Kraftaufwand erforderlich, um die Tür nach außen zu schwenken, da nicht nur die Tür geöffnet, sondern auch zugleich die Rutsche aus der Tür herausgezogen werden muss, Ist die Rutsche vollständig herausgezogen worden, so verringert sich die Kraft deutlich, die für das vollständige Öffnen der Tür benötigt wird. Der Bediener steht dabei 2 m bis 8 m über der Landefläche. Durch die plötzlich auftretende Verringerung des Widerstandes besteht die große Gefahr, dass der Bediener aus der Kabine stürzt, Unfälle dieser Art haben sich in der Praxis leider schon ereignet,

Gerade im Fall einer notfallmäßigen Landung treten die verschiedensten Situationen und Störungen auf, die trainiert werden müssen, Ein Simulator der eingangs genannten Art soll möglichst viele verschiedene Situationen simulieren können, die in der Praxis auftreten können, Im Unterschied zu einer realen Flugzeugtür ist bei einem Simulator zu bedenken, dass eine Tür unabhängig vom Geschehen möglichst oft geschlossen und wieder geöffnet werden können soll, um Wartezeiten zu vermeiden, Diese Anforderungen sollen natürlich möglichst preiswert realisiert werden können.

Es ist Aufgabe der Erfindung, einen Simulator für eine Flugzeugtür bereit zu stellen, mit dem Unfallsituationen trainiert werden können,

Zur Lösung der Aufgabe umfasst ein Simulator einen Ausschnitt eines Flugzeugrumpfes eines Verkehrsflugzeugs mit einer Flugzeugtür, Der Simulator umfasst einen ersten Motor und zwar insbesondere einen Servomotor, mit dem insbesondere die Flugzeugtür nach Umlegen eines Hebels automatisiert geöffnet und insbesondere auch wieder automatisiert geschlossen werden kann, Es kann so das automatische Öffnen einer Tür viele Male am Tag trainiert werden,

In einer Ausführungsform der Erfindung ist ein Motor, insbesondere eine Servomotor vorzugsweise angrenzend an die Seite der Tür vorgesehen, die die Tür mit dem Flugzeugrumpf schwenkbar verbindet, Der Motor befindet sich dann nahe beim Schwenkmechanismus, der die Tür aufschwenken lässt, Über ein Kardangelenk ist der Antriebsmotor mit der Türaufhängung bzw, mit einem dafür vorgesehenen schwenkbaren Arm verbunden. Der Motor bzw, Servomotor wird insbesondere elektrisch angetrieben, Es ist aber auch ein pneumatischer Antrieb usw, möglich. Der Motor springt an, wenn die Tür ein automatisches Öffnen im Fall einer Notlandung simulieren soll, Ein solcher Antrieb ist sehr viel genauer im Vergleich zu einem Antrieb über Riemen und Ketten, der sich aus Platzgründen anbietet, Der Einbau eines Antriebs mit Riemen und Ketten wäre sehr einfacher und preiswerter möglich. Versuche haben jedoch ergeben, dass vor allem das Vorsehen eines Servomotors, der direkt mit dem Kardangelenk verbunden ist, aus Gründen der Zuverlässigkeit und Genauigkeit dennoch vorzuziehen ist. Es werden so Toleranzen vermieden, die andernfalls nachteilhaft in Kauf hätten genommen werden müssen.

Im Anschluss an eine Notlandung kann es aufgrund von Verkeilung und dergleichen passieren, dass der für das automatische Öffnen der Tür vorgesehene Hebel sich nur schwergängig umlegen lässt, Zu diesem Zweck weist der Simulator in einer Ausführungsform der Erfindung Mittel auf, um die Kraft zu verändern, mit der ein Hebel umgelegt werden muss,

Im Unterschied zu einem realen Flugzeug ist der Hebel für das automatische Öffnen der Tür in einer Ausführungsform der Erfindung ebenfalls mit einem Motor, so zum Beispiel mit einem Schrittmotor, jedoch besonders bevorzugt mit einem Servomotor verbunden, Wird der Hebel umgelenkt, so wird der Motor mechanisch entsprechend angetrieben. Auf diese Weise übermittelt der Motor eine Information an einen weiteren Motor und zwar insbesondere wiederum an einen Servomotor, wie weit der Hebel geöffnet worden ist, Diese weitergegebene Information an den zweiten Motor bewirkt, dass die Tür entsprechend weit angehoben wird und zwar motorgetrieben.

Durch dieses Zusammenwirken der Motoren können die verschiedensten Situationen mehrere 1 00 Male am Tag simuliert werden, die in der Praxis auftreten können.

So wird der Motor, der mit dem Hebel für das automatische Öffnen der Tür verbunden ist, auch dazu genutzt, um unterschiedliche Kräfte zu simulieren, die für das Umlegen des Hebels erforderlich sind. Soll also eine besondere Schwergängigkeit des Hebels simuliert werden, so wird der Motor entsprechend angetrieben, und es muss gegen die Motorkraft der Hebel umgelegt werden. Gesteuert wird diese Situation wie auch die verschiedensten anderen Situationen vorzugsweise über einen Computer nebst entsprechendem Softwareprogramm. Es ist u.a. deshalb die Verwendung von Servomotoren zu bevorzugen, da diese sehr genau angesteuert und umgekehrt sehr genaue Informationen über das Geschehen zu liefern vermögen, Eine Steuerung über Computer und Software ist so besonders gut möglich.

Bei einer Notfalllandung kann die Situation auftreten, dass das automatische Öffnen der Tür beschädigt ist, In diesem Fall muss eine Tür von Hand geöffnet werden. Wird die Tür nach außen geschwenkt, so wird in einer Ausführungsform der Erfindung durch ein entsprechendes Bremsmittel eine große Kraft simuliert, die für das Öffnen der Tür zunächst erforderlich ist, Insbesondere der Motor, der über ein Kardangelenk mit dem Scharnier der Tür verbunden ist, kann dafür eingesetzt werden. Es muss dann gegen die Motorkraft die Tür geöffnet werden, Dies erfordert einen großen Kraftaufwand. Es wird so die Stellung der Tür erreicht, bei der die Rutsche ganz aus der Tür herausgezogen ist, Die Tür ist dann regelmäßig in etwa halb geöffnet, Ist diese Stellung erreicht worden, so ist der Simulator in einer Ausführungsform der Erfindung so beschaffen beziehungsweise wird so gesteuert, dass nun nur noch eine leichte Kraft benötigt wird, um die Tür vollständig zu öffnen, Diese Änderung der erforderlichen Kraft stellt einen Gefahrenpunkt dar, wenn sich das Personal mit voller Kraft gegen die Tür stemmt, um diese zu Öffnen, Dieser Moment kann mit dem Simulator trainiert werden, Insbesondere wird so vermieden, dass eine Person aus dem Flugzeug stürzt, weil sich unerwartet die erforderliche Kraft verringert, die für das Öffnen der Tür notwendig ist, Personen werden also darauf trainiert, das sich vorhersehbar oder überraschend die Kraft verändern kann, die für das Öffnen der Tür benötigt wird, Diese Ausführungsform der Erfindung ist insbesondere dann vorgesehen, wenn der Simulator keine Rutsche umfasst, die in der Tür untergebracht ist und mit dem Boden des Flugzeugs über schwenkbare Klauen verbunden wird.

In einer Ausführungsform der Erfindung ist der Simulator mit einem solchen Programm ausgerüstet beziehungsweise wird so gesteuert, dass eine unterschiedliche Schwergängigkeit des Öffnens der Tür simuliert wird. Es wird so simuliert, dass beispielsweise Wind oder Windböen das Öffnen der Tür behindern oder unterstützen und zwar entweder nur zeitweilig oder kontinuierlich,

Es wird dadurch trainiert, dass das Personal, welches die Tür von Hand öffnet, damit vertraut ist, dass sich die Kraftverhältnisse plötzlich ändern, die für das Öffnen der Tür benötigt werden,

Eine Tür eines Verkehrsflugzeuges ist normalerweise mit einem Fenster versehen. Anstelle des Fensters ist in einer Ausführungsform der Erfindung ein Monitor vorgesehen, der die Außensituation simuliert, so zum Beispiel das Vorhandensein eines Feuers, Als Reaktion hierauf darf diese Tür nicht benutzt werden, um das Flugzeug zu verlassen.

Werden Motoren anstelle von konventionellen Bremsen eingesetzt, um Schwergängigkeiten zu simulieren, so können viele verschiedene Situationen verbessert simuliert werden,

In einer Ausführungsform weist der Simulator einen Wendemechanismus beim Austrittsbereich im Boden auf, Der Mechanismus ist seitlich mit einem Motor verbunden, Wird dieser Abschnitt des Bodens um 180° gedreht, so wird in einer Ausführungsform eine eingeklinkte Rutsche dargestellt, Diese Darstellung einer Rutsche reicht ein Stück weit hinaus. Damit ist die reale Situation im Eingangsbereich wiedergegeben, die herrscht, wenn eine Rutsche vorhanden ist, ohne eine reale Rutsche verwenden zu müssen, Dies spart vor allem Zeit und reduziert das Unfollrisiko beim Training. Beispielsweise das Umlegen des Hebels kann damit trainiert werden, der das Verbinden bzw, das Entriegeln der Rutsche mit dem Boden bewirkt. Wird dieser Hebel umgelegt, so dreht sich in einer Ausführungsform der entsprechende Bodenbereich um 180° und stellt die jeweilig geänderte Situation dar,

In einer Ausführungsform die Erfindung gibt es einen Monitor, der von außen angrenzend an die Tür so angebracht ist, dass dieser oder ein darüber befindliches Sicherheitsglas betreten werden kann. Ein Monitor im Sinne der Erfindung ist jedes Mittel zur Wiedergabe eines Films oder Videos. Vorzugsweise wird aus Platzgründen ein Plasmamonitor eingesetzt. Der Monitor bzw. seine Fläche zur Darstellung eines Videos oder Films ist insbesondere parallel zum Fußboden angeordnet. Mithilfe eines Computers und eines entsprechenden Softwareprogramms oder auch über vergleichbare Verfahren wie Videoanimation werden auf dem Monitor, vorzugsweise über eine stegfreie, virtuelle Darstellung in einer Ausführungsform der Erfindung die verschiedenen Situationen abgespielt, die beim Herausfallen der Rutsche auftreten können. Es kann so dargestellt werden, dass eine Rutsche ordnungsgemäß während des Öffnens der Tür herausfällt und sich ordnungsgemäß aufbläst oder aber auch, dass sie in ordnungsgemäß aufgeblasenem Zustand den Untergrund nicht erreicht, Es kann dargestellt werden, dass eine Rutsche herausfällt, sich aber nicht automatisch aufbläst. In diesem Fall sind Mittel vorgesehen, die das Aufblasen manuell starten, In Abhängigkeit von der Situation, die simuliert werden soll, hat das Betätigen dieser Mittel zur Folge, dass sich die Rutsche ordnungsgemäß aufbläst oder nicht, Der Monitor dient also allgemein dazu, das Verhalten einer Rutsche lediglich zu simulieren. Es wird so vor allem Platz und Zeit eingespart und das Unfallrisiko während des Trainings reduziert,

Der Monitor zeigt insbesondere folgende verschiedene Situationen an, Es wird über ein Video dargestellt, gemäß dem alles ordnungsgemäß abläuft, Es wird dargestellt, dass sich die Rutsche zwar aufgeblasen hat, den Untergrund aber nicht erreicht, Es wird dargestellt, dass sich die Rutsche nicht aufgeblasen hat. In diesem Fall gibt es einen "Manuell Inflation Handle", also einen Griff, der im Boden eingelassen ist, An diesem wird gezogen oder gedrückt und dadurch kann die Rutsche mechanisch ausgelöst werden, Funktioniert auch dieses nicht, was über den Monitor gezeigt werden kann, so muss eine andere Tür benutzt werden,

Der Monitor ist insbesondere begehbar, um den Innenraum des Simulators über den Monitor und über eine beispielsweise damit verbundene Treppe betreten und verlassen zu können, Dies spart Platz, der für das Aufstellen des Simulators benötigt wird, da der Monitor dann eine Doppelfunktion erfüllt, nämlich zum einen die Darstellung einer Rutsche und deren Verhalten und zum anderen als Plattform, die für das Betreten und Verlassen des Simulators vor allem dann benötigt wird, wenn wie bei einem realen Flugzeug ein großer Abstand von mehreren Metern zum Untergrund vorhanden ist,

Der Monitor ist vorzugsweise gedämpft gelagert, um diesen vor Erschütterungen zu schützen.

Im Hintergrund hinter dem Monitor, der das Verhalten einer Rutsche darstellt, gibt es vorzugsweise einen weiteren senkrecht oder schräg aufgestellten Monitor oder eine Präsentationsfläche, Auf dem Monitor beziehungsweise der Präsentationsfläche wird die Umgebung simuliert. Insbesondere wird dafür eine Rückwandprojektion eingesetzt, um so eine große Präsentationsfläche bereitstellen zu können, die störungsfrei ein Foto oder Video etc, darstellen kann, Es kann so simuliert werden, dass im Feld gelandet worden ist oder beispielsweise ordnungsgemäß auf einer Landebahn. Die verschiedenen Situationen haben unterschiedliche Handlungsweisen des Personals zur Folge, die so trainiert werden können. Es kann so auch beispielsweise dargestellt werden, wie das Flugzeug im Verhältnis zur übrigen Landschaft gelandet ist, also beispielsweise ohne ausgefahrenes Fahrwerk oder nur teilweise ausgefahrenes Fahrwerk, so dass das Flugzeug sozusagen schräg liegt, Dafür dient der hintere Monitor beziehungsweise Präsentationsfläche, um diese unterschiedlichen Situationen darzustellen und trainieren zu können,

In einer Ausführungsform der Erfindung weist ein Simulator mehrere unterschiedliche Türen auf. Jede Tür simuliert einen anderen Flugzeugtyp, So kann auf engstem Raum für verschiedene Flugzeugtypen trainiert werden.

Der Simulator weist in einer Ausführungsform der Erfindung unterschiedliche Rumpfformen und Durchmesser auf. Dies simuliert unterschiedlich große Flugzeuge bei dem selben Simulator.

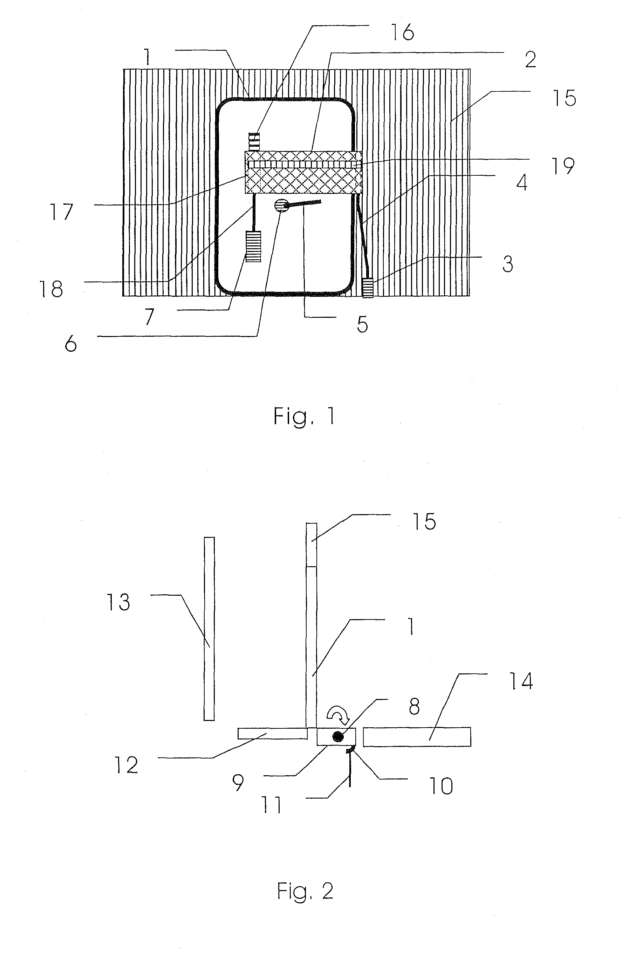

Figur 1 skizziert eine vom Inneren des Simulators aus gesehene Aufsicht eine Tür 1 eines Verkehrsflugzeuges. Ein Arm 2 ist auf der links gezeigten Seite mit der Tür 1 und auf der rechts gezeigten Seite mit einer angrenzenden Wand 15 des Simulators schwenkbar verbunden, Dadurch kann die Tür nach außen geschwenkt und so geöffnet werden. Ein Servomotor 3 ist rechts unten nahe bei der Tür 1 angebracht und über eine Kardanwelle 4 mit einer Schwenkeinrichtung (2, 19) so verbunden, das mit Hilfe des Servomotors 3 die Tür 1 motorisiert geöffnet und geschlossen werden kann. Zugleich dient dieser Motor 3 dazu, einen erhöhten Kraftaufwand zu simulieren, der für das manuelle Öffnen der Tür 1 erforderlich ist,

Soll die Tür geöffnet werden, so ist der Hebel 5 umzulegen, Dieser ist mit einem Servomotor 6 verbunden, Der Servomotor 6 liefert einerseits Informationen über die Stellung des Hebels 5 und zwar an einen Computer, Dieser steuert in Abhängigkeit von einem vorgegebenen oder ausgewählten Programm den Motor 7 an, mit dem die Tür 1 angehoben und abgesenkt werden kann, Der Motor 7 ist an der Tür angebracht und zwar unterhalb des schwenkbaren Arms 2.

Um die Tür anheben zu können, mündet ein an der Tür 1 befestigtes Rohr 1 6 in eine entsprechende rohrförmige, durch punktierte Linien angedeutete Führung 1 7 ein, die Teil des Arms 2 ist. Das Rohr 16 kann gegenüber dieser Führung nach oben verschoben werden. Vom Motor 7 führt eine Spindel 18 zum Arm 2. Wird die Spindel 18 gedreht, so wird damit die Tür gegenüber dem Arm 2 angehoben oder abgesenkt. Dieser Aufbau hat sich als zuverlässig und wartungsarm erwiesen, um die Tür im Rahmen eines Trainings fortlaufend anheben und absenken zu können, Um die Tür während des Aufwands geeignet zu führen, gibt es einen Kettenantrieb 19. Eine Drehung der Kardanwelle 4 mit Hilfe des Motors 3 dreht aufgrund der Kette 19 zugleich die Tür (1) gegenüber dem Arm 2. So wird dafür Sorge getragen, dass während des Öffnens der Tür 1 diese ihre parallele Lage zur Wand 15 beibehält, Dies entspricht den realen Bedingungen bei einem Flugzeug,

Figur 2 skizziert einen seitlichen Schnitt durch die Tür 1 Vor dieser Tür gibt es im Inneren des Simulators einen um die Achse 8 um 180° drehbaren Bodenabschnitt 9. An einer Seite weist dieser Bodenabschnitt Klauen 10 mit einem daran befindlichen Abschnitt 1 1 auf, der dem Anfang einer mit diesem Bodenabschnitt verbundenen Rutsche gleicht. Wird der Bodenabschnitt 9 gesteuert durch ein Programm in Richtung des gezeigten Pfeils um 180° gedreht, so wird eine eingehängte Rutsche simuliert, Wie sich diese Rutsche verhält, wird auf dem Monitor 1 2 dargestellt. Auf einem senkrecht dazu angeordneten Monitor 13 wird ein Geschehen oder eine Landschaft außerhalb des Simulators dargestellt,

Der Monitor 12 bzw. eine darüber angebrachte Scheibe kann betreten werden, Die Scheibe ist mit einer Treppe verbunden, über die der Simulator betreten oder verlassen werden kann,

## Patentansprüche

1. Simulator für die Simulation eines Ein- und Ausstiegs für ein Verkehrsflugzeug mit einer Tür (1) und wenigstens einem Motor (3, 6, 7), mit dem die Tür (1) oder Teile (5) der Tür bewegbar oder Bewegungen bremsbar sind, und/ oder mit einem ersten Monitor (12), der parallel zum Fußboden (9, 1 4) des Simulators sowie angrenzend an den Fußboden sowie angrenzend an die Tür (1) angeordnet ist.

2. Simulator nach Anspruch 1,
mit einem ersten Servomotor (3), mit dem die Tür (1) geöffnet, geschlossen oder ein manuelles Öffnen der Tür gebremst werden kann, mit einem zweiten Servomotor(6), mit dem die Stellung eines für das Öffnen und Schließen der Tür (1) vorgesehenen Hebels (5) ermittelt und mit dem das Betätigen des Hebels (5) abgebremst werden kann, mit einem dritten Servomotor (7), mit dem die Tür (1) angehoben und abgesenkt werden kann,
mit einem an die Tür angrenzend angebrachten, drehbaren Bodenabschnitt (9), der Klauen (1 0) mit einer Einhängung (11) auf einer Seite umfasst,
mit einem ersten Monitor (12), der parallel zum Fußboden (14) des Simulators und von außen angrenzend an den drehbaren Bodenabschnitt (9) angeordnet ist,
mit einem zweiten Monitor (13), der gegenüberliegend zur Tür (1) außerhalb angeordnet ist,
mit einer Treppe, die an den ersten Monitor angrenzt,
mit einem mit den Motoren und den Bildschirmen verbundenen Computer und einem auf dem Computer befindlichen Programm, welches so ist, dass verschiedene Situationen simuliert werden können.

3. Simulator nach Anspruch 1 oder 2, mit einem Arm (2) der schwenkbar mit der Tür (1) und schwenkbar mit einer Wand (15) des Simulators verbunden ist, wobei eine Verbindung des Arms mit der Tür über ein Rohr (16) und einer Führung für das Rohr (16) vorgesehen ist, wobei das Rohr entlang der Führung verschoben werden kann, mit einem an der Tür angebrachten Motor (7), der über eine Spindel mit dem Arm (2) derart verbunden ist, dass mittels der Spindel die Tür (1) gegenüber der Wand (1 5) angehoben und abgesenkt werden kann,

4. Simulator nach einem der vorhergehenden Ansprüche mit einem an der Tür (1) angebrachten Motor (6), an dem ein Hebel (5) befestigt ist, wobei durch Drehen des Hebels (5) der Motor (6) betätigt wird beziehungsweise durch Betätigen des Motors der Hebel gedreht wird.

5. Simulator nach einem der vorhergehenden Ansprüche mit einem an einer Wand des Simulators angebrachten Motor (3), der über eine Kardanwelle (4) einen Arm (2) zu schwenken vermag, der schwenkbar mit einer Wand (1 5) des Simulators sowie schwenkbar mit der Tür (1) verbunden ist,

6. Simulator nach einem der vorhergehenden Ansprüche mit einem zweiten Monitor (13) zur Darstellung einer Landschaft außerhalb des Simulators, der gegenüberliegend der Tür (1) außerhalb angeordnet ist,

7. Simulator nach einem der vorhergehenden Ansprüche mit einer Treppe, die mit dem begehbaren ersten Monitor (1 2) verbunden ist,

8. Simulator nach einem der vorhergehenden Ansprüche mit mehreren unterschiedlichen Türen (1).

9. Simulator nach einem der vorhergehenden Ansprüche mit einer Steuereinrichtung, die so programmiert ist, dass sich die Tür (1) zunächst nur mit großem Kraftaufwand öffnen läst und während des Öffnens sich der Kraftaufwand deutlich verringert,

10. Verfahren für das Training einer Notfallsituation mit einem Simulator nach einem der vorhergehenden Ansprüche, bei dem der Kraftaufwand für das Umlegen eines Hebels (5) für das Öffnen der Tür (1) während des Trainings verändert wird und/ oder der Kraftaufwand für das manuelle Öffnen der Tür (1) während des Trainings verändert wird und/oder das Verhalten einer Rutsche über den ersten Monitor (1 2) dargestellt wird,
